# EUROPÄISCHE PATENTSCHRIFT

(11) **EP 1 669 777 B1**
(45) Veröffentlichungstag und Bekanntmachung des Hinweises auf die Patenterteilung: **14.10.2009**
(21) Anmeldenummer: 04106500.4
(22) Anmeldetag: 13.12.2004
(51) Int. Cl.: G01T 1/29, H03M 1/18

(54) **Vorrichtung zum Auslesen von in einer Speicherleuchtstoffschicht gespeicherter Röntgeninformation**
Device for reading out X-ray information stored in a storage phosphor layer
Dispositif pour la lecture de données obtenues par absorption de rayons X stockées dans une couche d'enregistrement luminescente

(43) Veröffentlichungstag der Anmeldung: 14.06.2006
(73) Patentinhaber: Agfa-Gevaert HealthCare GmbH, 50670 Köln (DE)
(72) Erfinder: Nitsche, Werner, 82008, Unterhaching (DE); Kahlert, Hans-Jürgen, 82069, Schäftlarn (DE); Gerstlauer, Bernd, 81541, München (DE)

(56) Entgegenhaltungen:
- EP-A- 0 138 024
- EP-A- 0 966 105
- EP-A- 1 111 795

## Beschreibung

Die Erfindung betrifft eine Vorrichtung zum Auslesen von in einer Speicherleuchtstoffschicht gespeicherter Röntgeninformation gemäß dem Oberbegriff von Anspruch 1.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Bei gattungsgemäßen Vorrichtungen nach dem Stand der Technik werden die bei der Erfassung des Emissionslichts von einem Detektor erzeugten Detektorsignale durch einen Analog-Digital-Wandler in digitale Detektorsignalwerte umgewandelt.
Eine solche Vorrichtung ist z.B. aus EP 0 138 024 A1 bekannt.

Die hierbei erhaltenen Detektorsignalwerte werden typischerweise mit einer Auflösung von 12 oder 14 Bit angegeben, was einer Abstufung der erzeugten Detektorsignalwerte in maximal 4096 bzw. 16384 Stufen entspricht.

Damit bei der Digitalisierung der Detektorsignale die jeweils maximal mögliche Auflösung erreicht werden kann, wird vor dem Auslesen einer Speicherleuchtstoffschicht die Vorverstärkung der analogen Detektorsignale in Abhängigkeit von der Höhe der beim Auslesen dieser Speicherleuchtstoffschicht zu erwartenden Detektorsignale eingestellt. Diese Einstellung wird häufig unter Berücksichtigung der so genannten Speed Class vorgenommen, welche ein Maß für die bei der Röntgenaufnahme in der Speicherleuchtstoffschicht gespeicherte Röntgendosis darstellt.

Da die genannte Einstellung durch eine Bedienperson vorgenommen wird, können Bedienungsfehler nicht ausgeschlossen werden. Die in der Speicherleuchtstoffschicht gespeicherte Röntgeninformation wird im Falle eines Bedienungsfehlers dann nicht mit der erforderlichen Auflösung ausgelesen und digitalisiert. Die Röntgenaufnahme muss dann in der Regel wiederholt werden, was eine zusätzliche Strahlenbelastung des zu untersuchenden Patienten zur Folge hat.

Aus EP 0 966 105 A2 ist eine elektrische Schaltung bekannt, in welcher ein Analogsignal - ggf. nach Verstärkung durch einen Vorverstärker - mehreren Analog-Digital-Wandlern zugeführt wird.

Es ist Aufgabe der Erfindung, eine Vorrichtung zum Auslesen von in einer Speicherleuchtstoffschicht gespeicherter Röntgeninformation anzugeben, in welcher die Detektorsignale mit größerer Zuverlässigkeit und möglichst hoher Auflösung digitalisiert werden können.

Diese Aufgabe wird gemäß Anspruch 1 dadurch gelöst, dass mindestens zwei Analog-Digital-Wandler vorgesehen sind, die in unterschiedlichen Wandlungsbereichen betrieben werden und dabei das analoge Detektorsignal in unterschiedliche digitale Teilsignalwerte umwandeln können. Darüber hinaus ist eine Auswertungseinrichtung zur Ermittlung eines digitalen Detektorsignalwertes aus den digitalen Teilsignalwerten vorgesehen. Unter dem Wandlungsbereich eines Analog-Digital-Wandlers ist hierbei der jeweilige Signalbereich zu verstehen, innerhalb dessen das analoge Detektorsignal in einen entsprechenden digitalen Detektorsignalwert umgewandelt werden kann.

Die unterschiedlichen Wandlungsbereiche der einzelnen Analog-Digital-Wandler können hierbei bereits bei der Herstellung der Vorrichtung durch Wahl des Bautyps und/oder des Empfindlichkeitsbereichs und/oder der Beschaltung der einzelnen Analog-Digital-Wandler so eingestellt werden, dass bei allen in Frage kommenden Röntgenaufnahmen mit unterschiedlichen Speed Classes zumindest ein Analog-Digital-Wandler vorhanden ist, in dessen Wandlungsbereich das analoge Detektorsignal liegt.

Durch die Erfindung kann auf eine manuelle Voreinstellung der bei einem Auslesevorgang zu erwartenden Intensität des Emissionslichts verzichtet werden, wodurch die Zuverlässigkeit beim Auslesen und Digitalisieren der Röntgeninformation erhöht wird. Darüber hinaus wird hierdurch eine hohe Auflösung der digitalen Detektorsignalwerte gewährleistet.

Erfindungsgemäß ist mindestens eine Anpassungseinrichtung vorgesehen zur Ableitung von mindestens zwei analogen Teilsignalen aus dem analogen Detektorsignal und zur Zuführung jeweils eines der analogen Detektorsignale zu jeweils einem der Analog-Digital-Wandler. Die abgeleiteten analogen Teilsignale können hierbei unterschiedliche oder aber auch gleiche Signalhöhe aufweisen. Durch die Anpassungseinrichtung lassen sich die einzelnen Analog-Digital-Wandler unterschiedlich beschalten, wodurch der Betrieb der Analog-Digital-Wandler in unterschiedlichen Wandlungsbereichen auf einfache Weise realisiert werden kann.

Zur Realisierung unterschiedlicher Wandlungsbereiche der Analog-Digital-Wandler ist erfindungsgemäß vorgesehen, dass die Anpassungseinrichtung einen Spannungsteiler umfasst, der das analoge Detektorsignal in mindestens zwei analoge Teilsignale mit unterschiedlicher Signalhöhe teilt. Im einfachsten Fall wird der Spannungsteiler durch entsprechend geschaltete ohmsche Widerstände realisiert, wobei die den einzelnen Analog-Digital-Wandlern zugeführten analogen Teilsignale an unterschiedlichen Punkten des Spannungsteilers abgegriffen werden.

Im Folgenden werden Beispiele näher erläutert, durch welche - einzeln oder in Kombination - ein Betrieb der Analog-Digital-Wandler in unterschiedlichen Wandlungsbereichen realisiert werden kann.

In einem Beispiel zum Betrieb der Analog-Digital-Wandler in unterschiedlichen Wandlungsbereichen ist vorgesehen, dass die Anpassungseinrichtung einen oder mehrere Verstärker zur unterschiedlichen Verstärkung des analogen Detektorsignals umfasst, wobei mindestens zwei analoge Teilsignale mit unterschiedlicher Signalhöhe erhalten werden. Die unterschiedlich verstärkten analogen Teilsignale werden den einzelnen Analog-Digital-Wandlern zur Digitalisierung zugeführt. Auch diese Variante stellt eine zuverlässige Möglichkeit zur Realisierung unterschiedlicher Wandlungsbereiche der Analog-Digital-Wandler dar.

Bei einem weiteren Beispiel zum Betrieb der Analog-Digital-Wander in unterschiedlichen Wandlungsbereichen ist vorgesehen, dass die Analog-Digital-Wandler unterschiedliche Empfindlichkeitsbereiche für die analogen Teilsignale aufweisen. Unter dem Empfindlichkeitsbereich eines Analog-Digital-Wandlers ist hierbei der jeweilige Signalbereich zu verstehen, innerhalb dessen ein am Analog-Digital-Wandler anliegendes analoges Teilsignal in einen entsprechenden digitalen Teilsignalwert umgewandelt werden kann.

Unterschiedliche Empfindlichkeitsbereiche können dadurch realisiert werden, dass Analog-Digital-Wandler unterschiedlichen Bautyps eingesetzt werden, welche unterschiedlich große Empfindlichkeitsbereiche aufweisen.

Alternativ oder zusätzlich können aber auch Analog-Digital-Wandler verwendet werden, deren Empfindlichkeitsbereiche einstellbar sind. Dies erfolgt vorzugsweise durch Einstellen der Verstärkung der jeweiligen Teilsignale in den jeweiligen Analog-Digital-Wandlern. Dies wird beispielsweise mit Analog-Digital-Wandlern realisiert, die einen so genannten Programmable Gain Amplifier (PGA) aufweisen.

Alternativ oder zusätzlich können die Empfindlichkeitsbereiche der einzelnen Analog-Digital-Wandler auch durch Wahl der Referenzspannungen eingestellt werden, welche an den einzelnen Analog-Digital-Wandlern anliegen und eine Bezugsgröße für die Verstärkung des jeweiligen analogen Teilsignals darstellen.

Auch durch die zuletzt genannten Möglichkeiten der Wahl unterschiedlicher Empfindlichkeitsbereiche wird ein zuverlässiger Betrieb der Analog-Digital-Wandler in unterschiedlichen Wandlungsbereichen auf einfache Weise realisiert.

Besonders vorteilhaft hinsichtlich Genauigkeit und Zuverlässigkeit ist eine Kombination aus einer Anpassungseinrichtung mit Spannungsteiler und der Einstellung unterschiedlicher Empfindlichkeitsbereiche der jeweiligen Analog-Digital-Wandler durch unterschiedliche Verstärkung der Teilsignale sowie unterschiedliche Referenzspannungen an den jeweiligen Analog-Digital-Wandlern.

Die von den unterschiedlichen Analog-Digital-Wandlern erzeugten digitalen Teilsignalwerte werden einer Auswertungseinrichtung zugeführt, welche zur Ermittlung eines digitalen Detektorsignalwertes aus den digitalen Testsignalwerten ausgebildet ist. Vorzugsweise wird der digitale Detektorsignalwert hierbei durch eine Auswahl eines der digitalen Teilsignalwerte ermittelt.

Die Auswertungseinrichtung ist hierbei mit einer geeigneten Steuerlogik versehen, die denjenigen digitalen Teilsignalwert auswählt, welcher
- im Vergleich zu den anderen digitalen Teilsignalwerten am größten ist und
- kleiner ist als ein für den jeweiligen Analog-Digital-Wandler maximal möglicher digitaler Wert.

Hierdurch wird der digitale Teilsignalwert desjenigen Analog-Digital-Wandlers ausgewählt, dessen Wandlungsbereich optimal genutzt wird. Dabei werden insbesondere digitale Teilsignalwerte verworfen, d.h. von einer Auswahl ausgeschloswenn sie im Bereich der unteren Grenze oder oberhalb der oberen Grenze des Wandlungsbereichs eines Analog-Digital-Wandlers liegen. Dies kann von der Steuerlogik insbesondere dadurch erkannt werden, dass die erzeugten digitalen Teilsignalwerte im Bereich des kleinstmöglichen digitalen Wertes bzw. beim maximal möglichen digitalen Wert liegen, z.B. nahe 0 bzw. bei 16384 im Falle eines Analog-Digital-Wandlers mit einer maximalen Auflösung von 14 Bit.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: eine Vorrichtung zum Auslesen einer Speicherleuchtstoffschicht;
- Fig. 2: den Verlauf eines Detektorsignals;
- Fig. 3: aus dem Detektorsignal abgeleitete Detektorsignalwerte; und
- Fig. 4: ein Beispiel für eine elektrische Schaltung zur erfindungsgemäßen Umwandlung des analogen Detektorsignals in digitale Detektorsignalwerte.

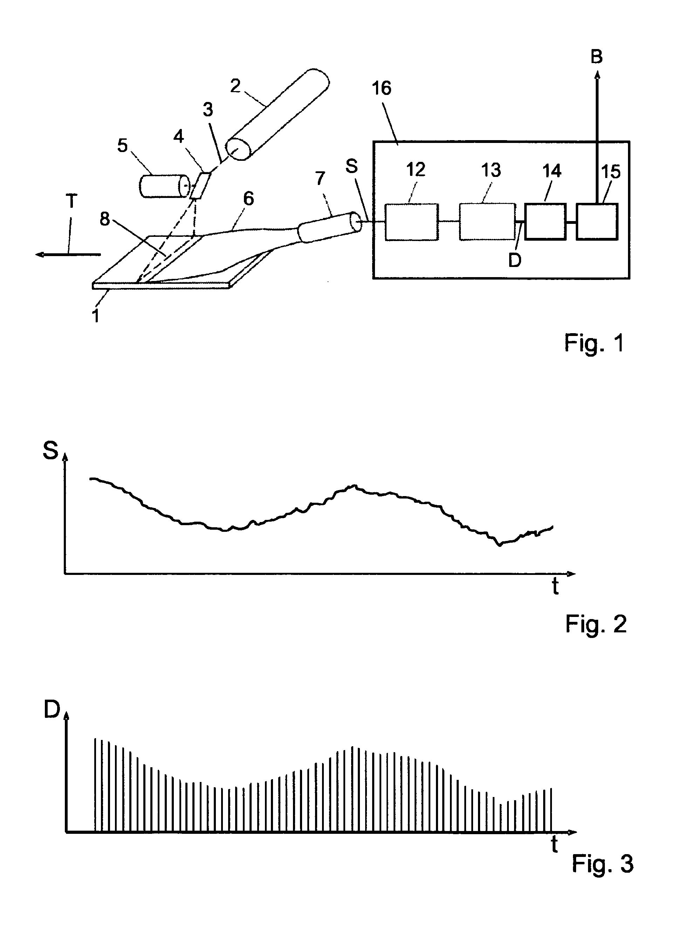

Fig. 1 zeigt eine Vorrichtung zum Auslesen einer Speicherleuchtstoffschicht 1. Durch einen Laser 2 wird ein Stimulationslichtstrahl 3 erzeugt, welcher durch ein von einem Motor 5 in Rotation versetztes Ablenkelement 4 derart abgelenkt wird, dass sich dieser entlang einer Zeile 8 über die auszulesende Speicherleuchtstoffschicht 1 bewegt. Das Ablenkelement 4 ist vorzugsweise als Spiegel, insbesondere als Polygonspiegel oder Galvanometerspiegel, ausgebildet.

Während der Bewegung des Stimulationslichtstrahls 3 entlang der Zeile 8 sendet die Speicherleuchtstoffschicht 1 in Abhängigkeit der darin gespeicherten Röntgeninformation Emissionslicht aus, welches von einer optischen Sammeleinrichtung 6, beispielsweise einem Lichtleiterbündel, gesammelt, weitergeleitet und von einem an die Sammeleinrichtung 6 gekoppelten optischen Detektor 7, vorzugsweise einem Photomultiplier, erfasst und in ein entsprechendes analoges Detektorsignal S umgewandelt wird. Fig. 2 zeigt ein Beispiel für den Verlauf eines hierbei erhaltenen analogen Detektorsignals S über der Zeit t.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Durch einen Transport der Speicherleuchtstoffschicht 1 in Transportrichtung T wird ein sukzessives Auslesen einzelner Zeilen 8 erreicht und damit ein zweidimensionales, aus einzelnen Bildpunkten mit jeweils einem zugehörigen Bildsignalwert B bestehendes Röntgenbild erhalten. Beträgt die Anzahl der in Transportrichtung T ausgelesenen Zeilen 8 beispielsweise 1500, so werden mit beispielsweise jeweils 1000 Bildpunkten pro Zeile 8 für das ausgelesene Röntgenbild insgesamt 1500 x 1000 Bildpunkte mit jeweils einem zugehörigen Bildsignalwert B erhalten.

Das analoge Detektorsignal S wird in dem hier dargestellten Ausführungsbeispiel zunächst durch ein Tiefpassfilter 12 gefiltert, wobei höherfrequente Anteile des Detektorsignals S, insbesondere Rauschanteile, eliminiert oder zumindest reduziert werden. Das gefilterte, analoge Detektorsignal S wird einer Digitalisierungseinrichtung 13 zugeführt und dort mit einer vorgegebenen Abtastfrequenz abgetastet und digitalisiert, wobei pro Abtastvorgang ein digitaler Detektorsignalwert D in digitalen Einheiten erhalten wird. Die Abtastfrequenz liegt typischerweise zwischen 1 und 12 MHz.

Das Abtasten des analogen Detektorsignals S in der Digitalisierungseinrichtung 13 erfolgt vorzugsweise nach dem sog. Sample and Hold-Prinzip, bei welchem die jeweils aktuelle analoge Signalhöhe des zu einem Abtastzeitpunkt an der Digitalisierungseinrichtung 13 anliegenden Detektorsignals S gehalten und in einen entsprechenden digitalen Detektorsignalwert D umgewandelt wird.

Aus den in einem Speicher 14 zwischengespeicherten digitalen Detektorsignalwerten D werden schließlich in einer Recheneinheit 15 die einzelnen Bildsignalwerte B ermittelt, indem z.B. zwei oder mehrere Detektorsignalwerte D zu einem Bildpunkt zusammengefasst werden und daraus - beispielsweise durch Mittelwertbildung -ein zu diesem Bildpunkt gehörender Bildsignalwert B berechnet wird.

Fig. 3 zeigt eine Vielzahl von digitalen Detektorsignalwerten D über der Zeit t, die aus dem in Fig. 2 dargestellten analogen Detektorsignal S abgeleitet wurden. Der zeitliche Abstand der einzelnen Detektorsignalwerte D zueinander wird durch die vorgegebene Abtastfrequenz der Digitalisierungseinrichtung 13 bestimmt. Jedem Zeitpunkt entspricht hierbei ein bestimmter Ort des Stimulationslichtstrahls 3 auf der Zeile 8 der Speicherleuchtstoffschicht 1. Die Abtastfrequenz ist hierbei vorzugsweise so gewählt, dass für jeden einzelnen Bildpunkt entlang der Zeile 8 mindestens zwei digitale Detektorsignalwerte D erhalten werden, aus welchen ein jeweils zu einem Bildpunkt gehörender Bildsignalwert B errechnet werden kann.

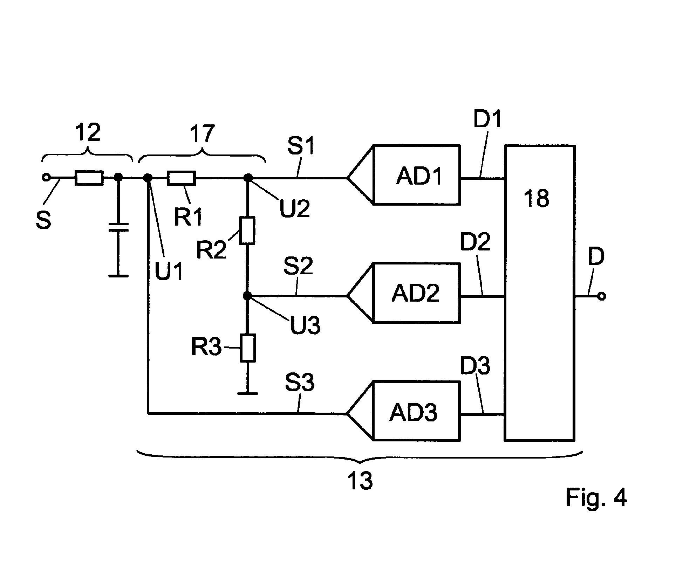

Fig. 4 zeigt ein Beispiel für eine elektrische Schaltung zur erfindungsgemäßen Ableitung von digitalen Detektorsignalwerten D aus dem analogen Detektorsignal S. Das am Eingang der elektrischen Schaltung anliegende analoge Detektorsignal S wird zunächst durch ein Tiefpassfilter 12 gefiltert, welches im dargestellten Beispiel einen ohmschen Widerstand sowie einen Kondensator umfasst und höherfrequente Signalanteile, insbesondere Rauschanteile, aus dem Detektorsignal S eliminiert.

Das gefilterte analoge Detektorsignal S wird dann über eine Anpassungseinrichtung 17 in drei analoge Teilsignale S1, S2 und S3 aufgeteilt. In dem dargestellten Beispiel ist die Verteilungseinrichtung 17 als Spannungsteiler ausgebildet, welcher sich aus drei ohmschen Widerständen R1, R2 und R3 zusammensetzt. Die an unterschiedlichen Stellen des Spannungsteilers abgegriffenen analogen Teilsignale S1, S2 und S3 weisen im Allgemeinen unterschiedliche Signalhöhen U1, U2 bzw. U3 auf.

Die analogen Teilsignale S1, S2 und S3 werden jeweils einzeln Analog-Digital-Wandlern AD1, AD2 und AD3 zugeführt und von diesen in entsprechende digitale Teilsignalwerte D1, D2 bzw. D3 umgewandelt. In einer Auswertungseinrichtung 18 wird aus den digitalen Teilsignalwerten D1, D2 und D3 ein digitaler Detektorsignalwert D abgeleitet, was vorzugsweise durch die Auswahl eines digitalen Teilsignalwertes D1, D2 bzw. D3 erfolgt.

Die Anpassungseinrichtung 17, die Analog-Digital-Wandler AD1, AD2 und AD3 sowie die Auswertungseinrichtung 18 bilden zusammen die Digitalisierungseinrichtung 13 (siehe auch Fig. 1), deren Funktionsweise nachfolgend anhand eines konkreten Beispiels näher erläutert wird.

In diesem Beispiel sind die drei Analog-Digital-Wandler AD1, AD2 und AD3 gleichen Bautyps und weisen jeweils eine Auflösung von 16 Bit auf, d. h. die von den einzelnen Analog-Digital-Wandlern AD1, AD2 bzw. AD3 erzeugten digitalen Teilsignalwerte D1, D2 bzw. D3 können mit einer Genauigkeit von maximal 65536 Stufen bzw. unterschiedlichen Werten, nämlich von 0 bis 65535, angegeben werden.

Durch die Wahl der Widerstände R1, R2 und R3 des Spannungsteilers der Anpassungseinrichtung 17 sowie der Empfindlichkeitsbereiche der einzelnen Analog-Digital-Wandler AD1, AD2 und AD3 werden unterschiedliche Wandlungsbereiche der einzelnen Analog-Digital-Wandler AD1, AD2 und AD3 realisiert. In dem hier vorstellten Beispiel ist der Wandlungsbereich des ersten Analog-Digital-Wandlers AD1 4 mal so groß wie der Wandlungsbereich des zweiten Analog-Digital-Wandlers AD2 und 16 mal so groß wie der Wandlungsbereich des dritten Analog-Digital-Wandlers AD3.

Mit dem zweiten und dritten Analog-Digital-Wandler AD2 bzw. AD3 können folglich nur Detektorsignale S digitalisiert werden, die höchstens 1/4 bzw. 1/16 der maximalen Höhe des durch den ersten Analog-Digital-Wandler AD1 umwandelbaren Detektorsignals S aufweisen.

Das folgende Zahlenbeispiel soll dies verdeutlichen: Beträgt die maximal zu erwartende Signalhöhe des analogen Detektorsignals S 6 V, so ist die elektrische Schaltung so dimensioniert und/oder sind die Empfindlichkeitsbereiche so gewählt, dass der erste Analog-Digital-Wandler AD1 einen Wandlungsbereich zwischen 0 V und 6 V aufweist. Die Wandlungsbereiche des zweiten bzw. dritten Analog-Digital-Wandlers AD2 bzw. AD3 liegen dementsprechend zwischen 0 V und 1,5 V bzw. zwischen 0 V und 0,375 V.

Liegt nun ein analoges Detektorsignal S mit einer Signalhöhe von 0,2 V am Eingang der Digitalisierungseinrichtung 13 an, so nehmen die digitalen Teilsignalwerte D1, D2 und D3 die Werte 2185, 8738 bzw. 34952 und damit etwa 3 %, 13 % bzw. 53 % des maximal möglichen digitalen Wertes von 65535 an.

In der nachgeschalteten Auswerteeinrichtung 18 wird nun der digitale Teilsignalwert desjenigen Analog-Digital-Wandlers ausgewählt, dessen Wandlungsbereich am stärksten ausgeschöpft wird. In dem dargestellten Beispiel ist dies der dritte digitale Teilsignalwert D3. Dieser Wert wird schließlich als digitaler Detektorsignalwert D ausgegeben.

Der erste und zweite digitale Teilsignalwert D1 bzw. D2 liegen dagegen nahe an der unteren Grenze des jeweiligen Wandlungsbereichs und sind daher mit mehr Störungen, wie z. B Eigenrauschen, behaftet. Sie werden in der Auswerteeinrichtung 18 verworfen.

Liegt nun ein analoges Detektorsignal S mit einer Signalhöhe von 5 V am Eingang der Digitalisierungseinrichtung 13 an, so liefert lediglich der erste Analog-Digital-Wandler AD1 einen brauchbaren digitalen Teilsignalwert D1 mit dem Wert 54613, während der zweite und dritte Analog-Digital-Wandler jeweils den maximal möglichen digitalen Wert 65535 erzeugen. In diesem Fall wird in der nachgeschalteten Auswerteeinrichtung 18 der erste digitale Teilsignalwert D1 ausgewählt und nach einer Multiplikation mit dem Faktor 16, welcher den unterschiedlich großen Wandlungsbereichen Rechnung trägt, multipliziert und schließlich als digitaler Detektorsignalwert D ausgegeben.

Entsprechendes gilt für einen Detektorsignalwert S mit einer Signalhöhe von beispielsweise 1,2 V, bei welchem der zweite digitale Teilsignalwert D2 in Höhe von 52428 in der Auswerteeinrichtung 18 ausgewählt und nach einer Multiplikation mit dem Faktor 4 als digitaler Detektorsignalwert D ausgegeben wird.

Durch die beschriebene Schaltung und den erfindungsgemäßen Betrieb von zwei oder mehreren Analog-Digital-Wandlern wird also erreicht, dass der gesamte maximale Auflösungsbereich für das analoge Detektorsignal S über die jeweiligen maximalen Auflösungsbereiche der einzelnen Analog-Digital-Wandler AD1, AD2 bzw. AD3 hinausgeht. Im dargestellten Beispiel mit drei Analog-Digital-Wandlern mit einem maximalen Auslösungsvermögen von 16 Bit wird durch den erfindungsgemäßen Betrieb eine maximale Auflösung von 20 Bit mit maximal 1 048 576 Stufen erreicht.

Durch diesen Effekt können analoge Detektorsignale S also in einem deutlich größeren Dynamikbereich zuverlässig digitalisiert werden, ohne dass eine manuelle Einstellung der Vorverstärkung des Detektorsignals S unter Berücksichtigung von Speed Classes vorgenommen werden muss.

Im vorstehend näher erläuterten Beispiel weist die Digitalisierungseinrichtung 13 drei Analog-Digital-Wandler auf. Alternativ werden die Vorteile der Erfindung bereits mit zwei Analog-Digital-Wandlern erreicht, die in unterschiedlichen Wandlungsbereichen betrieben werden. Grundsätzlich kann die Digitalisierungseinrichtung 13 aber auch mehr als drei Analog-Digital-Wandler aufweisen. Der Dynamikbereich kann hierbei entsprechend vergrößert werden, z.B. auf 24 Bit oder höher.

**Hierzu 2 Blatt Zeichnungen**

## Patentansprüche

1. Vorrichtung zum Auslesen von in einer Speicherleuchtstoffschicht gespeicherter Röntgeninformation mit
- einer Bestrahlungseinrichtung (2, 4, 5) zum Bestrahlen der Speicherleuchtstoffschicht (1) mit Stimulationslicht (3), welches die Speicherleuchtstoffschicht (1) zur Aussendung von Emissionslicht anregen kann, und
- einem Detektor (7) zum Erfassen von von der Speicherleuchtstoffschicht (1) ausgehendem Emissionslicht und zum Umwandeln des erfassten Emissionslichts in ein analoges Detektorsignal (S),
**gekennzeichnet durch**
- mindestens zwei Analog-Digital-Wandler (AD1, AD2, AD3), die in unterschiedlichen Wandlungsbereichen betrieben werden und dabei das analoge Detektorsignal (S) in unterschiedliche digitale Teilsignalwerte (D1, D2, D3) umwandeln können,
- eine Auswertungseinrichtung (18) zur Ermittlung eines digitalen Detektorsignalwertes (D) aus den digitalen Teilsignalwerten (D1, D2, D3) und
- mindestens eine Anpassungseinrichtung (17) zur Ableitung von mindestens zwei analogen Teilsignalen (S1, S2, S3) aus dem analogen Detektorsignal (S) und zur Zuführung jeweils eines der analogen Teilsignale (S1, S2, S3) zu jeweils einem der Analog-Digital-Wandler (AD1, AD2, AD3), wobei die Anpassungseinrichtung (17) einen Spannungsteiler (R1, R2, R3) umfasst, der das analoge Detektorsignal (S) in mindestens zwei analoge Teilsignale (S1, S2, S3) mit unterschiedlicher Signalhöhe (U1, U2, U3) teilt.

2. Vorrichtung nach Anspruch 1, **dadurch gekennzeichnet, dass** die Anpassungseinrichtung (17) einen oder mehrere Verstärker zur unterschiedlichen Verstärkung des analogen Detektorsignals (S) umfasst, wobei mindestens zwei analoge Teilsignale (S1, S2, S3) mit unterschiedlicher Signalhöhe (U1, U2, U3) erhalten werden.

3. Vorrichtung nach einem der Ansprüche 1 oder 2, **dadurch gekennzeichnet, dass** die Analog-Digital-Wandler (AD1, AD2, AD3) unterschiedliche Empfindlichkeitsbereiche für die analogen Teilsignale (S1, S2, S3) aufweisen.

4. Vorrichtung nach Anspruch 3, **dadurch gekennzeichnet, dass** die Empfindlichkeitsbereiche zumindest eines Analog-Digital-Wandlers (AD1, AD2, AD3) durch Einstellen der Verstärkung (PGA) des jeweiligen Teilsignals (S1, S2, S3) in diesem Analog-Digital-Wandler (AD1, AD2, AD3) und/oder durch Wahl einer Referenzspannung dieses Analog-Digital-Wandlers (AD1, AD2, AD3) einstellbar ist.

5. Vorrichtung nach einem der vorangehenden Ansprüche, **dadurch gekennzeichnet, dass** die Auswertungseinrichtung (18) zur Ermittlung des digitalen Detektorsignalwertes (D) durch Auswahl eines der digitalen Teilsignalwerte (D1, D2, D3) ausgebildet ist.

6. Vorrichtung nach Anspruch 5, **dadurch gekennzeichnet, dass** die Auswertungseinrichtung (18) zur Auswahl desjenigen digitalen Teilsignalwertes (D1, D2, D3) ausgebildet ist, welcher im Vergleich zu den anderen digitalen Teilsignalwerten (D1, D2, D3) am größten ist.

7. Vorrichtung nach Anspruch 5 oder 6, **dadurch gekennzeichnet, dass** die Auswertungseinrichtung (18) zur Auswahl desjenigen digitalen Teilsignalwertes (D1, D2, D3) ausgebildet ist, welcher kleiner ist als ein für den jeweiligen Analog-Digital-Wandler (AD1, AD2, AD3) maximal möglicher digitaler Wert.

## Claims

1. An apparatus for reading out X-ray information stored in a storage phosphor layer having
- an irradiation device (2, 4, 5) for irradiating the storage phosphor layer (1) with stimulation light (3) which can stimulate the storage phosphor layer (1) to emit emission light, and
- a detector (7) for collecting emission light leaving the storage phosphor layer (1) and for converting the emission light collected into an analogue detector signal (S),
**characterised by**
- at least two analogue to digital converters (AD1, AD2, AD3) which are operated in different conversion ranges and can thus convert the analogue detector signal (S) into different digital partial signal values (D1, D2, D3),
- an evaluation device (18) for determining a digital detector signal value (D) from the digital partial signal values (D1, D2, D3) and
- at least one matching device (17) for deriving at least two analogue partial signals (S1, S2, S3) from the analogue detector signal (S) and for conveying a respective one of the analogue partial signals (S1, S2, S3) to a respective one of the analogue to digital converters (AD1, AD2, AD3), the matching device (17) comprising a voltage divider (R1, R2, R3) which divides the analogue detector signal (S) into at least two analogue partial signals (S1, S2, S3) with different signal heights (U1, U2, U3).

2. The apparatus according to Claim 1, **characterised in that** the matching device (17) comprises one or more amplifiers for different amplification of the analogue detector signal (S), at least two analogue partial signals (S1, S2, S3) being obtained with different signal heights (U1, U2, U3).

3. The apparatus according to any of Claims 1 or 2, **characterised in that** the analogue to digital converters (AD1, AD2, AD3) have different sensitivity ranges for the analogue partial signals (S1, S2, S3).

4. The apparatus according to Claim 3, **characterised in that** the sensitivity ranges of at least one analogue to digital converter (AD1, AD2, AD3) can be adjusted by adjusting the amplification (PGA) of the respective partial signal (S1, S2, S3) in this analogue to digital converter (AD1, AD2, AD3) and/or by choosing a reference voltage of this analogue to digital converter (AD1, AD2, AD3).

5. The apparatus according to any of the preceding claims, **characterised in that** the evaluation device (18) is designed to determine the digital detector signal value (D) by selecting one of the digital partial signal values (D1, D2, D3).

6. The apparatus according to Claim 5, **characterised in that** the evaluation device (18) is designed to select the digital partial signal value (D1, D2, D3) which is the largest in comparison to the other digital partial signal values (D1, D2, D3).

7. The apparatus according to Claim 5 or 6, **characterised in that** the evaluation device (18) is designed to select the digital partial signal value (D1, D2, D3) which is smaller than a maximum possible digital value for the respective analogue to digital converter (AD1, AD2, AD3).

## Revendications

1. Dispositif destiné à la lecture d'une information radiographique mémorisée dans une couche de mémorisation à base de phosphore, comportant
- un dispositif d'exposition (2, 4, 5) servant à exposer la couche de mémorisation à base de phosphore (1) à de la lumière de stimulation (3) pouvant stimuler la couche de mémorisation à base de phosphore (1) à émettre de la lumière d'émission, et
- un détecteur (7) capable de détecter la lumière d'émission émise par la couche de mémorisation à base de phosphore (1) et de convertir la lumière d'émission détectée en un signal de détection (S) analogue,
**caractérisé par**
- au moins deux convertisseurs analogue/numérique (AD1, AD2, AD3) pouvant procéder dans des plages de conversion différentes et ainsi convertir le signal de détection (S) analogue en des valeurs de signaux numériques partiels différents (D1, D2, D3),
- un dispositif d'évaluation (18) permettant de déterminer une valeur de signal de détection numérique (D) à partir des valeurs de signaux numériques partiels (D1, D2, D3), et
- au moins un dispositif d'adaptation (17) permettant de dériver au moins deux signaux analogues partiels (S1, S2, S3) à partir du signal de détection (S) analogue et d'affecter respectivement un des signaux analogues partiels (S1, S2, S3) à un des convertisseurs analogue/numérique (AD1, AD2, AD3) respectif, le dispositif d'adaptation (17) comprenant un diviseur de tension (R1, R2, R3) qui divise le signal de détection (S) analogue en au moins deux signaux analogues partiels (S1, S2, S3) de hauteur de signal (U1, U2, U3) différente.

2. Dispositif selon la revendication 1, **caractérisé en ce que** le dispositif d'adaptation (17) comporte un ou plusieurs amplificateurs pour amplifier différemment le signal de détection (S) analogue, en produisant ainsi au moins deux signaux analogues partiels (S1, S2, S3) de hauteur de signal (U1, U2, U3) différente.

3. Dispositif selon l'une des revendications 1 ou 2, **caractérisé en ce que** les convertisseurs analogue/numérique (AD1, AD2, AD3) présentent des plages de sensibilité différentes pour les signaux analogues partiels (S1, S2, S3).

4. Dispositif selon la revendication 3, **caractérisé en ce que** les plages de sensibilité d'au moins un convertisseur analogue/numérique (AD1, AD2, AD3) peuvent être ajustées en réglant l'amplification (PGA) du signal partiel (S1, S2, S3) respectif dans ce convertisseur analogue/numérique (AD1, AD2, AD3) et/ou en choisissant une tension de référence de ce convertisseur analogue/numérique (AD1, AD2, AD3).

5. Dispositif selon l'une des revendications précédentes, **caractérisé en ce que** le dispositif d'évaluation (18) est conçu pour déterminer la valeur de signal de détection numérique (D) en choisissant une des valeurs de signaux numériques partiels (D1, D2, D3).

6. Dispositif selon la revendication 5, **caractérisé en ce que** le dispositif d'évaluation (18) est conçu pour choisir celle des valeurs de signaux numériques partiels (D1, D2, D3) qui est la plus importante comparativement aux autres valeurs de signaux numériques partiels (D1, D2, D3).

7. Dispositif selon la revendication 5 ou 6, **caractérisé en ce que** le dispositif d'évaluation (18) est conçu pour choisir celle des valeurs de signaux numériques partiels (D1, D2, D3) qui est inférieure à une valeur numérique maximale possible pour le convertisseur analogue/numérique (AD1, AD2, AD3) respectif.
